# EUROPEAN PATENT APPLICATION

(11) **EP 3 970 999 A1**
(43) Date of publication of application: **23.03.2022**
(21) Application number: 20197469.8
(22) Date of filing: 22.09.2020
(51) Int. Cl.: B60D 1/02, B60D 1/58

(54) **REPLACEABLE SUPPORT MEMBER FOR A TRAILER COUPLING**

(71) Applicant: VBG Group AB (Publ), 461 34 Trollhättan (SE)
(72) Inventor: Thorén, Anders, 460 64 FRÄNDEFORS (SE); Boström, Henrik, 461 34 Trollhättan (SE)
(74) Representative: AWA Sweden AB

(57) **Abstract**

A replaceable support member for a trailer coupling, the support member being intended to support an eye of a drawbar when the eye is secured by a vertically movable coupling pin, the support member thereby being susceptible to wear by the eye. At least a front supporting surface of the support member is formed by a elastically deformable portion, which has such a shape that, when the support member is arranged in a coupling, there will be substantially no gap between the front supporting surface and the front of the eye, so that, in use, when the drawbar is pushed upwards, the front of the eye will be pressed downwards, and compress the elastically deformable potion of the support member.

By making at least part of the support member of a elastically deformable/compressible material, no gap is required between the front surface of the support member and the eye.

## Description

### TECHNICAL FIELD OF THE INVENTION

The present invention relates to a replaceable support member for a trailer coupling and to a trailer coupling comprising such a support member.

### BACKGROUND OF THE INVENTION

Heavy vehicles, such as trucks, are often equipped with a coupling allowing a trailer to be connected to the vehicle. Two example of such couplings are VBG 795V-2 and Ringfeder Type 5055, both sold by VBG Group AB under the brands VBG and Ringfeder, respectively. These couplings have a guiding funnel (sometimes referred to as a coupling mouth) for receiving an eye of a drawbar fixed to a trailer and a vertically movable pin for securing the eye inside the guiding funnel.

The above-described type of coupling further has a replaceable support member (sometimes referred to as a "wear plate") arranged inside the guiding funnel, such that the eye of the drawbar will abut against and slide along this replaceable support member. This avoids contact wear between the guiding funnel and the eye. Instead, the support member will be worn and eventually need replacement. The support member is made of wearable material, selected such that the support member will be worn and not the eye. The support member is typically made of ductile cast iron.

A further requirement on this type of coupling is that the coupling allows angular movement of the drawbar in the vertical plane. Otherwise there is a risk of damaging the coupling when there is relative vertical movement between the trailer and the towing vehicle. There is a legal requirement that the drawbar can move +/- 20 degrees.

To allow for such movement, the support member is formed with an upper surface which is beveled on the front facing side as well as on the rear facing side, thereby forming a central ridge aligned with the center of the coupling pin. The eye of the drawbar will rest on the ridge, and the beveled surfaces on either side (front and rear) will allow the drawbar to rotate up and down.

However, the beveled portions of the support member have a drawback, in that they introduce a certain gap in the coupling, a gap which may cause a clattering sound and also a more rapid wear of the support member.

### SUMMARY OF THE INVENTION

In view of the foregoing, it is an object of the present invention to provide a replaceable support member for a coupling device which overcomes, or at least mitigates, the above mentioned drawback.

According to a first aspect of the invention, there is provided a replaceable support member for a trailer coupling mounted on a towing vehicle, the support member being intended to support an eye of a drawbar mounted to a trailer when the eye is secured by a vertically movable coupling pin, the support member thereby being susceptible to wear by the eye. At least a front supporting surface of the support member is formed by an elastically deformable portion, which has such a shape that, when the support member is arranged in a coupling, there will be substantially no gap between the front supporting surface and the front of the eye, so that, in use, when the drawbar is pushed upwards, the front of the eye will be pressed downwards, and compress the elastically deformable potion of the support member.

By making at least part of the support member of an elastically deformable/compressible material, the front upper surface may be compressed by the front portion of the eye, thereby allowing the required rotation of the drawbar. Therefore, no gap is required between the front surface of the support member and the eye. Instead, the front upper surface of the support member can always be in contact with the front end of the eye during use, thus avoiding the aforementioned drawbacks.

It is noted that the towing vehicle, on which the coupling is mounted, may be a trailer, which in turn is towed by another towing vehicle.

The elastically deformable material may be a suitable polymer material, such as polyurethane.

By "substantially no gap" is intended to mean that there is no gap that gives rise to the clattering present in the prior art. Specifically, there is no gap which allows the required rotation of the drawbar without deformation of the support member. As an example, "substantially no gap" may be understood to mean no gap greater than 2 mm, or no gap greater than 1 mm.

According to one embodiment, the support member comprises a non-compressible base portion, intended to face downwards when mounted in the coupling, wherein the elastically deformable portion is integrally formed with the base portion. The non-compressible base portion may be advantageous when the support member rests on a relatively small surface. The base portion may be made of a metal, e.g. cast iron.

By "integrally formed" is intended any type of attachment which is sufficiently strong and reliable. As one example, the deformable (plastic) portion may be vulcanized to the metal portion. Both portions are formed with matching protrusions, which serve to rotationally secure the portions to each other when pressed together.

This embodiment is particularly advantageous for a support emmber intended to be fitted in a coupling with a movable guiding funnel. In such a coupling, the support member typically rests directly on the coupling pin bushing, which would risk deforming a support member made entirely of a elastically deformable material. A non-compressible base portion (e.g. of metal) prevents deformation by the pressure exerted by the bushing.

The support member may in this case have a substantially annular shape (i.e. like an ice-hockey puck with a hole for the coupling pin). Such a support member is intended to be held in place by a separate holding element made e.g. of plastic, which surrounds and fixates the annular member. Such an annular support member and its holding element are typically arranged in an opening of a tiltable guiding funnel, and attached directly to the coupling jaw such that the support member rests on the coupling pin bushing as discussed above.

According to another embodiment, the support member is made of one homogenous piece of the elastically deformable material. This may enable a more cost-efficient production. Also, the deformation of the deformable material will in this case be distributed over a larger volume, potentially reducing stress and fatigue of the material.

This embodiment is particularly advantageous for a support member intended to be fitted in a coupling with a fixed guiding funnel. In such a coupling, the support member typically rests at least partly on the lower lip of the guiding funnel, thereby distributing the load and thus reducing pressure.

In this case, the support member may have an elongated shape so as to be configured to enable attachment to the lower lip of the guiding funnel using suitable fastening means. In this case, no separate holding element is therefore required. The support member is directly attached to the bottom of a guiding funnel, or in an opening of the guiding funnel, e.g. using screws.

According to a second aspect of the invention, the above object is achieved by a trailer coupling for connecting a trailer to a towing vehicle on which the trailer coupling is mounted, wherein the trailer coupling is adapted to receive an eye of a drawbar mounted to the trailer to be towed. The towing vehicle may be a trailer which is towed by another towing vehicle. The trailer coupling comprises a vertically movable coupling member having a first position, in which the coupling member allows for the eye to be moved into and out of a towing position, and a second position, in which the coupling member secures the eye in the towing position by extending through a central opening of the eye. The coupling further comprises a replaceable support member according to the first aspect of the invention.

According to some embodiments, the coupling member is arranged to be automatically locked in the first position upon entering the first position and to be unlocked by an upwards push caused by the eye.

The trailer coupling may comprise a guiding funnel arranged to guide the eye to the towing position.

The guiding funnel may be fixed to the coupling (e.g. like couplings sold under the brand VBG) or be sideways pivotable to further facilitate insertion of the eye (e.g. like couplings sold under the brand Ringfeder). In both cases, support members according to the first aspect of the invention may be advantageous.

As mentioned, in the former case - fixed guiding funnel - the support member may be mounted on the lower lip of the guiding funnel. In the latter case - pivotable guiding funnel - the support member may be mounted to the coupling jaw, and rest upon the coupling pin bushing.

### BRIEF DESCRIPTION OF THE DRAWINGS

The invention will now be described in more detail in the following with reference to the accompanying drawings, which by way of example illustrate a preferred embodiment of the invention.
Figure 1 is a perspective and partly exploded view of a trailer coupling and a drawbar according to a first embodiment of the invention.
Figure 2 is a perspective view of the coupling and drawbar in figure 1 in assembled state.
Figure 3a is a perspective view of the support member in figure 1.
Figure 3b is a perspective and partially broken away view of the support member in figure 1
Figure 4a and 4b is a cross section of the coupling and drawbar in figure 1, with the drawbar in two different positions.
Figure 5 is another example of a support member suitable for the coupling in figure 1.
Figure 6 is a perspective view of a trailer coupling and a drawbar according to a second embodiment of the invention.
Figure 7 is a perspective and partly exploded view of the coupling and drawbar in figure 6.

### DETAILED DESCRIPTION OF PREFERRED EMBODIMENTS

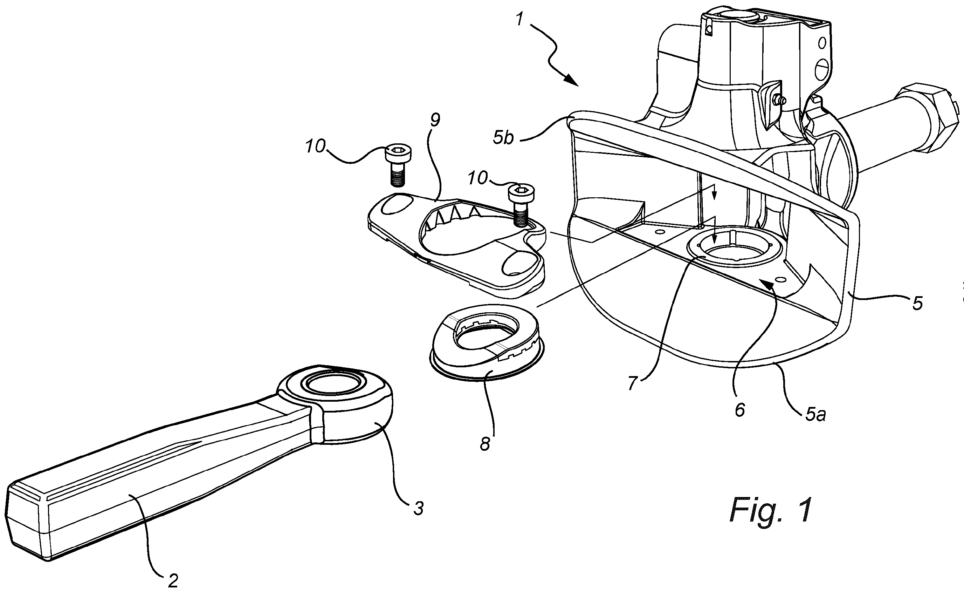

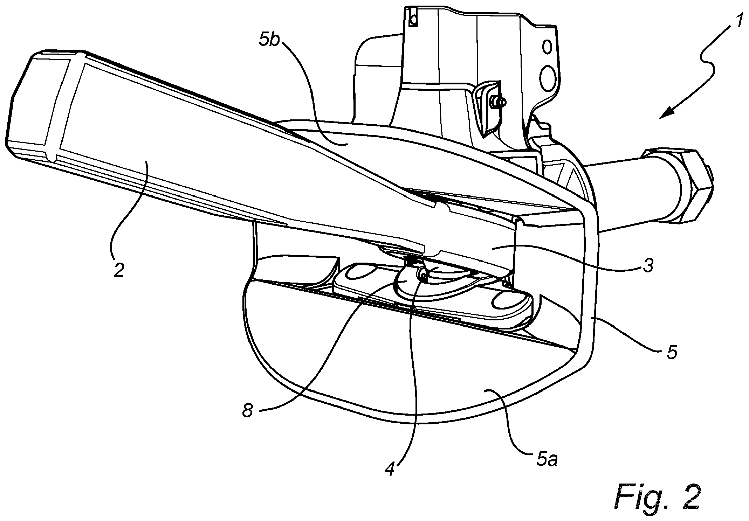

Figure 1-2 show a trailer coupling 1 adapted to be mounted at the rear end of a towing vehicle, such as a truck or a trailer, and to engage with an annular portion 2 of a drawbar 3 mounted to a trailer to be towed by the towing vehicle (the towing vehicle and the trailer to be towed are not shown in figure 1). The an annular portion is referred to as an eye 2, and the coupling 1 includes a jaw with a vertically translatable coupling member 4, sometimes referred to as a coupling bolt or coupling pin 4, configured to be inserted into the eye to secure the drawbar. The end of the coupling pin 4 is received by a bushing 7 in the lower part of the jaw.

The trailer coupling 1 further comprises a guiding funnel 5, sometimes referred to as a coupling mouth, typically made of a hard and wear-resistant material, such as steel or some other metal with similar properties. The guiding funnel 5 has two lips 5a, 5b. The two lips 5a, 5b are separated in the vertical direction, the lower lip 5a and the upper lip 5b extending obliquely downwards and obliquely upwards, respectively, in the rearward direction away from the truck. The lips 5a, 5b are arranged to guide the eye 100 into a towing position inside an interior of the guiding funnel 2. In this position the coupling pin 4 can be lowered in the opening of the eye 3, thereby mechanically securing the drawbar 2 in the coupling 1. In the example illustrated in figures 1-2, the coupling mouth is configured to be slightly pivotable in the horizontal plane, in order to facilitate guiding of the drawbar 2 into the coupling. Details of the coupling design are not provided here, but a relevant example is the Ringfeder Type 5055.

The lower lip 5a of the guiding funnel 5 has an opening 6, providing access to the bushing 7 for receiving the coupling pin 4. A support member 8 is arranged in this opening, the support member having opening positioned to receive the coupling pin 4 when in its lowered position. The support member 8 has such a form that the eye 3, when it has been secured in the trailer coupling 1 by the coupling pin 4, will rest against the upper surface of the support member 8. The support member 8 is removably arranged, so as to be replaceable when worn out due to friction between the eye 3 and the support member 8.

The size and the shape of the support member 8 will depend on application-specific requirements, such as the size of the coupling member 4 and the size of the eye 3 with which the trailer coupling 1 is intended to be used. In the illustrated case, the support member 8 has a circular annular shape, and is held in place by a holding element 9 of e.g. plastic, here attached with two screws 10 to the jaw of the coupling. The opening 6 is large enough to allow the guiding funnel to tilt sideways as intended.

The diameter of the hole of the support member 8 is such that it can receive the coupling pin 4, and is usually in the range of 30 mm to 70 mm. The maximum thickness of the support member 8 in an unworn state is typically less than 5 cm, for example approximately 3 cm.

In order to connect a trailer to the truck, the coupling pin 4 is first raised (manually or by actuator) to a locked upper position in which a lower portion of the pin still extends into the guiding funnel. The truck driver then moves the towing vehicle to position the eye 3 inside the guiding funnel 5. Upon entering the guiding funnel, the eye 3 comes into contact with the lower portion of the pin 4 and thereby pushes the pin slightly upwards. The upward movement releases the locked pin, which then drops down automatically through the eye, the pin 4 thereby locking the eye 3 in a towing position inside the guiding funnel.

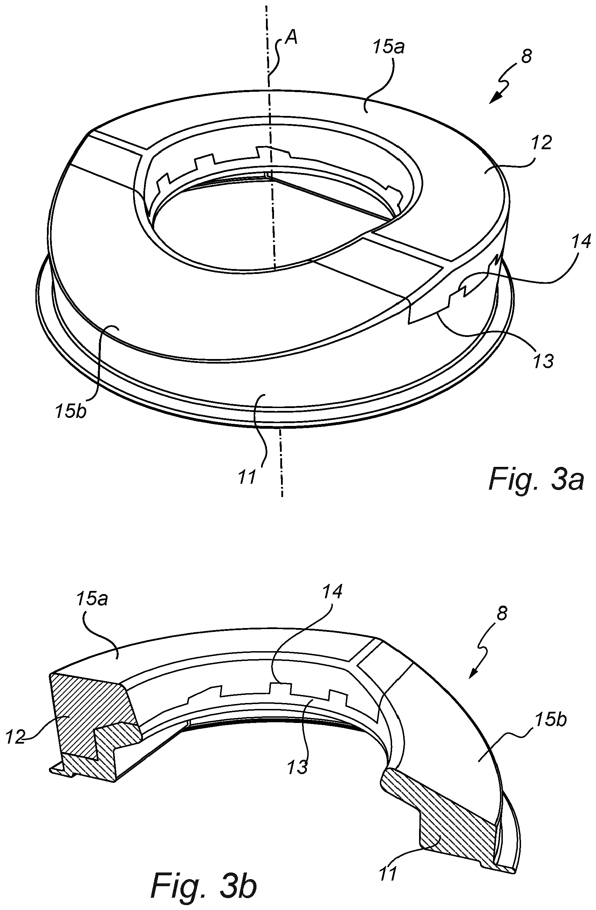

With reference to figure 3a and 3b, the annular support member 8 is shown in more detail. In the illustrated example, the support member 8 has a circular annular form, where one side 15a of the upper surface is flat (normal to the axis A), while the other side 15b is beveled (sloping).

The support member here comprises two portions 11, 12; a base portion 11 and a elastically deformable upper portion 12 made e.g. of polyurethane. The base portion 11, which will be subject to a high pressure when the support member rests on the bushing 7, is made of a non-deformable material such as metal, e.g. cast iron. The elastically deformable portion 12 forms at least the front upper surface 15a, which will support the front of the eye 3a.

The portions 11, 12 may be attached to each other by vulcanization or by an adhesive. In order to ensure that the attachment is rotationally fixed, the two portions 11, 12 may be formed with a set of matching protrusions 13, 14, which are interleaved with each other as shown in figure 3.

The inwards-facing upper surface 15a of the member 8, i.e. an upper surface of the elastically deformable portion 12, is flat, i.e. its surface is normal to the central axis A of the member 8. The outwards-facing upper surface 15b of the member 8 is beveled downwards, so as to match the slope of the lower lip 5a of the coupling mouth 5.

It is noted that the elastically deformable portion 12 may extend across the entire upper surface, so that also the beveled surface 15b is part of the elastically deformable portion 12.

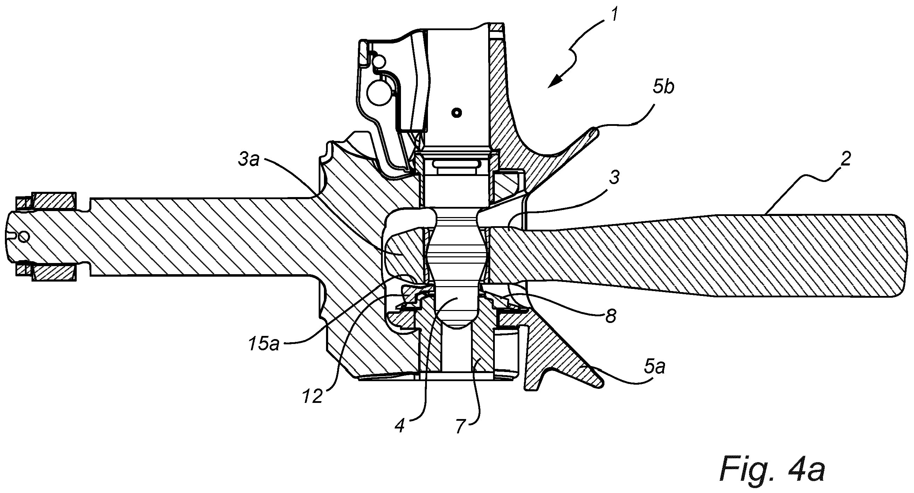

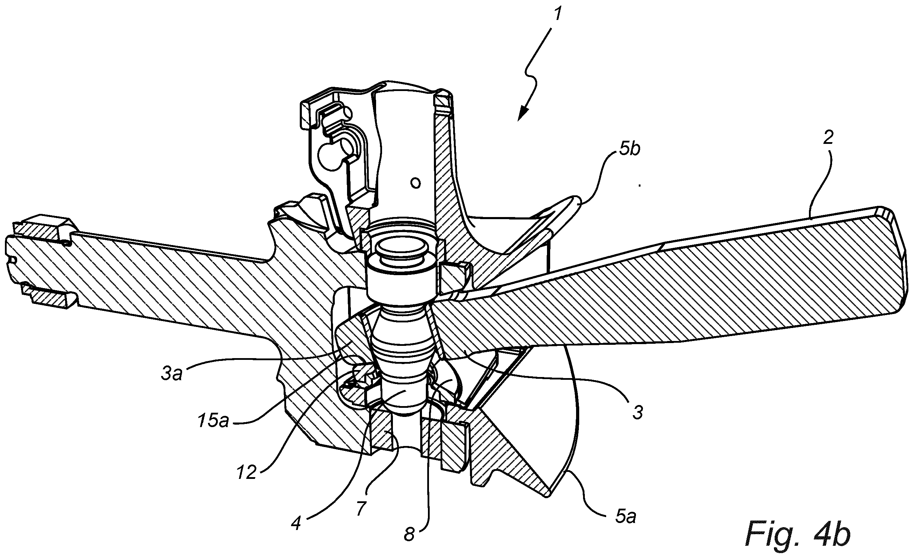

Figure 4a illustrates how the eye 3 of the drawbar 2 rests on the front surface 15a of the support member 8. When the drawbar 2 is rotated - e.g. because the trailer is located on higher ground than the towing vehicle - the front end of the eye 3 will be pushed downwards and deform the elastically deformable portion 12. This is shown in figure 4b.

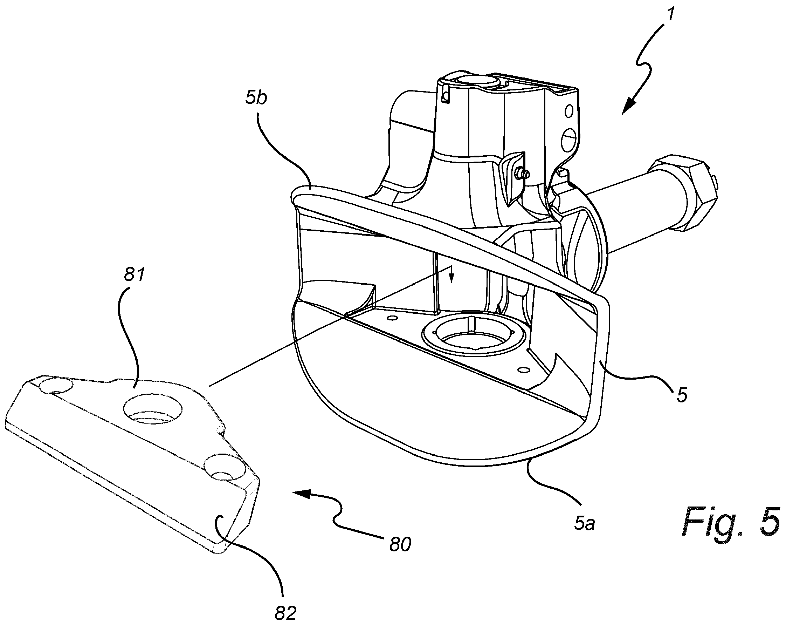

Figure 5 illustrates another example of a support member 80, also compatible with the coupling in figure 1-2. The support member 80 has a central portion 81 essentially corresponding to the annular support member 8, with similar requirements on the hole diameter and thickness. The support member 80 further has two wing portions 82 extending on either side of the central portion 81. The wing portions 82 are used for attaching the member 80, and are here provided with holes for receiving screws (not shown).

In the illustrated case, the support member 80 is formed as one homogenous piece of elastically deformable material, again e.g. polyurethane. It is noted that it would also be possible to make the member 80 as two portions of different material attached to each other.

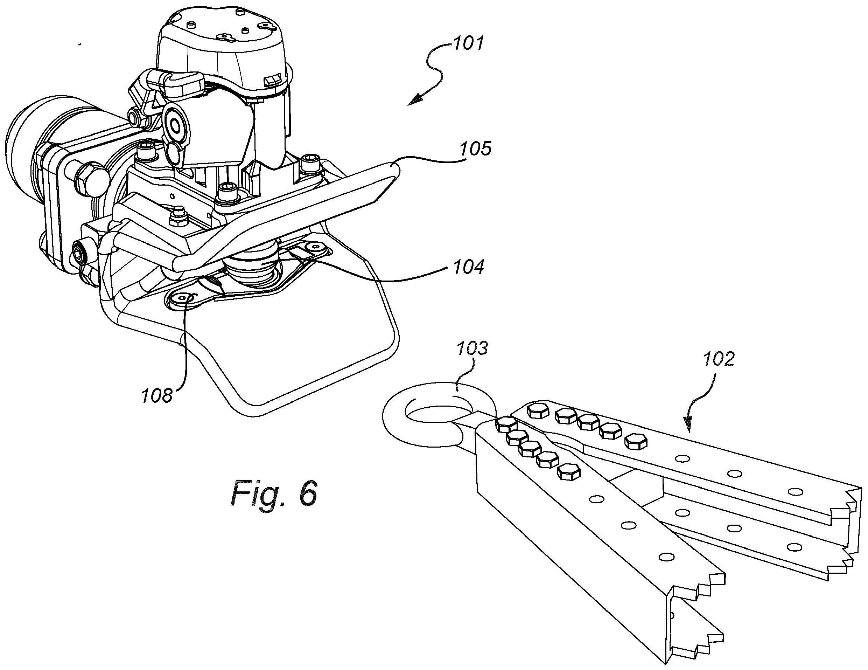

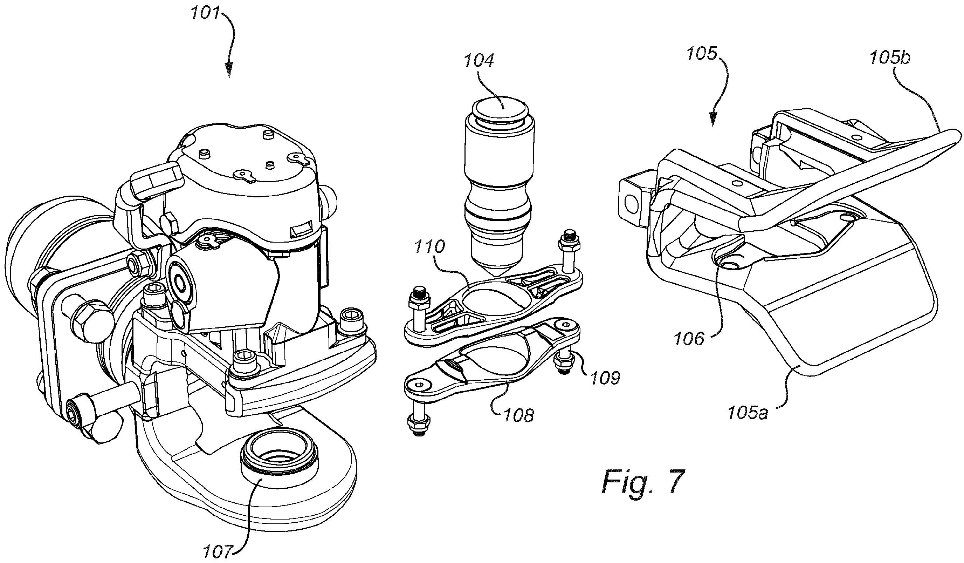

Turning to figures 6-7, there is illustrated another example of a trailer coupling 101 and drawbar 102. Similar to the coupling 1 in figures 1, 2 and 5, the trailer coupling 101 in figures 6-7 has a coupling pin 104, which may be lowered into an eye 103 of the drawbar 102, and a guiding funnel 105 with lower and upper lips 105a, 105b for guiding the eye 103 into the correct position. In this embodiment, the funnel 105 is fixed with respect to the coupling 101 and coupling pin 104.

The guiding funnel 105 comprises an opening 106 surrounded by a recess 107, shaped to receive a support member 108. The support member 108 has similar function as the support members 8 and 80, and is similar in form to the support member 80 (i.e. it is elongated and maybe formed as one homogeneous piece of elastically deformable material). The support member 108 is mounted directly to the (fixed) lower lip 105a of the guiding funnel 105.

The trailer coupling 101 in figures 6-7 further includes a protection member 110, which may also be made at least in part of a elastically deformable material, e.g. polyurethane. The protection member 110 is similar to the support member 108, but is arranged vertically opposite to the support member 108 so that, when the eye 103 is positioned in the towing position, the eye 103 is positioned between the support member 108 and the protection member 110. The protection member 110 helps to prevent the guiding funnel 105 and the eye 103 from wearing against each other. It should be noted that the protection member 110 is optional, so other examples of the trailer coupling 101 do not necessarily have a protection member 110.

The person skilled in the art realizes that the present invention by no means is limited to the preferred embodiments described above. On the contrary, many modifications and variations are possible within the scope of the appended claims. For example, the support member may have a different form depending on the type and design of trailer coupling. It is not necessarily configured to completely surround the coupling pin, but may be configured to be arranged only in front of the coupling pin. The support member may also be attached in other ways than those discussed herein.

## Claims

1. A replaceable support member (8; 80; 108) for a trailer coupling (1; 101) mounted on a towing vehicle, the support member (8, 80, 108) being intended to support an eye (3; 103) of a drawbar (2; 102) mounted to a trailer when the eye (3; 103) is secured by a vertically movable coupling pin (4; 104), the support member (8; 80; 108) thereby being susceptible to wear by the eye (3; 103),
**characterized in that**
at least a front supporting surface (15a) of the support member is formed by a elastically deformable portion (12),
said elastically deformable portion (12) having such a shape that, when the support member (8; 80; 108) is arranged in a coupling (1; 101), there will be substantially no gap between the front supporting surface (15a) and the front of the eye (3; 103),
so that, in use, when the drawbar is pushed upwards, the front of the eye will be pressed downwards, and compress the elastically deformable potion of the support member.

2. The replaceable support member according to claim 1, further comprising a base portion, intended to face downwards when mounted in the trailer coupling, said base portion being made of a non-compressible material such as metal, and wherein the elastically deformable portion is integrally formed with said base portion.

3. The replaceable support member (80) according to claim 1, made of a homogenous piece of the elastically deformable material.

4. The replaceable support member (8) according to any one of the preceding claims, wherein the support member has an circular annular form, and is intended to rest on a coupling pin bushing (7) and be held in place by a separate holding element (9).

5. The replaceable support member (80) according to any one of the preceding claims, wherein the support member has an elongated shape, and is configured to enable attachment using fastening means.

6. The replaceable support member according to any one of the preceding claims, wherein the elastically deformable material is a polymer material, such as polyurethane.

7. A trailer coupling (1; 101) for connecting a trailer to a towing vehicle on which the trailer coupling (1; 101) is mounted, wherein the trailer coupling (1; 101) is adapted to receive an eye (3; 103) of a drawbar (2: 102) mounted to the trailer to be towed, and wherein the trailer coupling (1; 101) comprises:
a vertically movable coupling member (8) having a first position, in which the coupling member (4; 104) allows for the eye (3; 103) to be moved into and out of a towing position, and a second position, in which the coupling member (4; 104) secures the eye (3; 103) in the towing position by extending through a central opening of the eye (3; 103); and
a replaceable support member (8; 80; 108) according to any of the preceding claims, the support member being arranged so that, when the eye (3; 103) is received by the trailer coupling (1; 101) and positioned in the towing position, the front of the eye (3; 103) rests against the front upper surface (15a) of the support member (8; 80; 108).

8. The trailer coupling (1;101) according to claim 7, wherein the coupling member (4; 104) is arranged to be automatically locked in the first position upon entering the first position and to be unlocked by an upwards push.

9. The trailer coupling (1; 101) according to any of the claims 7 or 8, further comprising a guiding funnel (5; 105) arranged to guide the eye (3; 103) to the towing position, and wherein the support member (8, 80, 108) is arranged in an opening (6; 106) of a lower lip (5a; 105a) of the guiding funnel (5; 105).

10. The trailer coupling (1; 101) according to claim 9, wherein the guiding funnel (5; 105) is pivotable in a horizontal plane.
